Europäisches Patentamt

European Patent Office

Office européen des brevets

(11) Publication number : **0 475 788 A2**

# (12) EUROPEAN PATENT APPLICATION

(21) Application number : **91308440.6**

(22) Date of filing : **16.09.91**

(51) Int. Cl.⁵ : **H04N 11/00**

(30) Priority : **14.09.90 GB 9020184**
**14.12.90 GB 9027173**

(43) Date of publication of application :
**18.03.92 Bulletin 92/12**

(84) Designated Contracting States :
**AT BE CH DE DK ES FR GR IT LI LU NL SE**

(71) Applicant : **BRITISH BROADCASTING CORPORATION**
**Broadcasting House**
**London W1A 1AA (GB)**

(72) Inventor : **Wells, Nicholas Dominic British Broadcasting**
**Corporation, Research Dept., Kingswood Warren,**
**Tadworth, Surrey KT20 6NP (GB)**
Inventor : **Weston, Martin**
**55 Salisbury Road, Banstead,**
**Surrey SM7 2DP (GB)**

(74) Representative : **Abnett, Richard Charles et al**
**REDDIE & GROSE 16 Theobalds Road**
**London WC1X 8PL (GB)**

(54) **Video signal transmission.**

(57)    A video signal having luminance samples at an averge sample rate consonant with HDTV standards is transmitted by a phase-segregated PAL or NTSC transmission method, e.g. Weston clean PAL. Samples are received at an average sample rate of at least 4fsc, and a luminance bandwidth reducer (14) pre-filters and sub-samples the samples to give an average sample rate of 2fsc. A sample repositioner (16) repositions the samples so that they lie on a 2fsc sampling grid in which form they can be encoded by a Weston clean PAL encoder (20).

EP 0 475 788 A2

*Fig.3*

This invention relates to methods of and apparatus for transmitting and receiving video signals, and more especially to the transmission of luminance signals at HDTV standards through transmission channels designed to carry conventional standard signals.

The term transmission and derivatives thereof is used herein for convenience in a broad sense to cover transmission over a distance and also storage and other signal processing.

## References

The following documents will be referred to in this specification.

(1) U.K. Patent Application GB-A-2 221 813 Bandwidth reduction of colour television signals.

(2) International (PCT) Patent Application Publication No. WO87/05770 Video signal processing for bandwidth reduction.

(3) U.K. Patent Application GB-A-2 044 577 Method and apparatus for coding and decoding PAL colour television signals.

(4) U.K. Patent Application GB-A-2 113 037, divided out of reference (3), Method and apparatus for coding and decoding PAL colour television signals.

(5) U.K. Patent Application GB-A-2 194 409 Video transmission systems.

(6) British Broadcasting Corporation Research Department Report RD 1989/10 HDTV Bandwidth reduction using motion compensation and DATV.

(7) U.K. Patent Application GB-A-2 045 577 Improvements in the processing of N.T.S.C. colour television signals.

(8) Drewery, J.O., EBU Technical Review No. 225, February 1986, A compatible improved PAL system.

Our prior United Kingdom patent No. 2,221,813 (reference 1) describes methods of combining HD-MAC type bandwidth reduction algorithms as in International (PCT) Patent Application WO87/05770 (reference 2) with simple "band segregated" Clean PAL. This system is capable of transmitting Extended Definition pictures in a form that is compatible with standard PAL, so the pictures can be received, at normal definition, by existing PAL decoders.

Another previously-proposed clean PAL system is known as Weston Clean PAL and is described in U.K. Patents Nos. 2,044,577 and 2,113,037 (references 3 and 4). This is a more sophisticated "phase segregated" form of clean PAL. Simple Clean PAL provides a (chrominance free) luminance bandwidth of approximately 3.5 MHz. Weston Clean PAL provides a bandwidth of 4.43 MHz.

In the standard PAL colour coding system the chrominance signals (U and V) are modulated in quadrature onto suppressed sub-carriers of frequency fsc (4,433,618.75 Hz for PAL system I). The modulated carriers are then added to the luminance component to form the PAL signal. PAL stands for Phase Alternate Line, because the phase of the V signal alternates line by line.

In the decoder the two chrominance signals are demodulated by a pair of synchronous demodulators operating in phase quadrature. Unfortunately these demodulators also demodulate any luminance signals present. This produces coloured patterning, called Cross-Colour, in areas of fine luminance detail.

Simple "Band Segregated" Clean PAL systems reduce this patterning by attenuating, in the coder, those luminance components above about 3.5 MHz, which give the most visible Cross-Colour patterning.

More sophisticated "Phase Segregated" Clean PAL coding systems such as the Weston system add extra luminance components to cancel Cross-Colour. These extra components are generated by modulating the luminance signal onto a carrier at exactly twice the frequency of the chrominance sub-carrier. The phase of the 2fsc carrier can be chosen so that the extra components combine with the original luminance to produce a resultant which is in phase quadrature with the chrominance signals, and is thus not demodulated. Achieving this for both U and V requires the use of a frequency dependent phase shifting network.

The spectrum of the luminance signal plus the extra 2fsc modulated component is similar to that produced by sampling the luminance at 2fsc. It can be shown that the Weston Clean PAL system is transparent to these 2fsc samples.

The HD-MAC bandwidth reduction system subsamples High Definition 1250-line signals, using a quincunx structure, to give 13.5 million luminance, and 6.75 million chrominance samples per second. These (analogue) samples are time division multiplexed and transmitted in a 10.125 MHz nominal bandwidth. The effect of HD-MAC type bandwidth reduction algorithms in sub-sampling on a spatio-temporal quincunx pattern is to fold the spectrum into a reduced bandwidth.

The present invention is defined in its various aspects in the appended independent claims, to which reference should now be made. Advantageous features of the invention are set out in the dependent claims.

We have appreciated that substantial and special advantages can flow from the use of algorithms similar to those proposed in U.K. Patent No. 2,221,813 in combination with a "phase segregated" form of Clean PAL such as Weston Clean PAL. In this way samples may be passed between the Weston and HD-MAC type sampling systems, and the bandwidth reduction system may be modified to make good use of the bandwidth available in a PAL system, and to minimise the visibility of impairments on the compatible PAL output.

While the foregoing discussion and the specific description given below are all in relation to PAL signals and to Clean PAL systems using a 2fsc sample rate, the invention is not limited to such signals. In particular, a similar procedure can be used with NTSC signals by employing the "Clean NTSC" 2fsc system described in United Kingdom Patent No. 2,045,577, reference (7).

The system provides two channels, one for luminance and one for chrominance, which can be treated independently. These independent channels can be used in conjunction with spectrum folding or techniques similar to those developed for bandwidth compression of HD-MAC luminance and chrominance signals, suitably scaled. Then, high definition luminance and chrominance signals, scaled in bandwidth by the ratio of channel bandwidths, can be obtained.

The invention will be described in more detail, by way of example, with reference to the drawings, in which:-

Figure 1 is a timing diagram showing how a 625-line HD-MAC output is derived from a 1250-line source signal by vertical sample repositioning;

Figure 2 is a diagram showing further sample repositioning in accordance with this invention to move the samples onto 2fsc sample sites;

Figure 3 is a block diagram of an encoder embodying the invention;

Figure 4 is a block diagram of the Weston Clean PAL combiner in the encoder of Figure 3;

Figure 5 is a block diagram of a decoder embodying the invention;

Figure 6 is a block diagram of the Weston Clean PAL splitter in the decoder of Figure 5;

Figure 7 is a diagram showing the alias frequencies and pass-band in the HD-MAC sampling system;

Figure 8 is a similar diagram of an alternative pass-band;

Figure 9 is a diagram illustrating how the samples from a high definition source signal may be repositioned in an alternative way to give half the horizontal sampling pitch and twice the vertical sample pitch; and

Figure 10 is a diagram similar to Figure 7 of an alternative pass-band for use with the modified signal of Figure 9.

As noted above we have appreciated that the HD-MAC subsampling process can be horizontally scaled to yield approximately the 2fsc luminance samples per second (461 samples per active line), which can be carried transparently by the Weston Clean PAL system.

However, the sampling sites of 2fsc do not form a quincunx structure as required by the HD-MAC algorithm. The samples generated by the HD-MAC coder need to be repositioned horizontally to lie on the 2fsc sampling sites. The repositioned samples can then be transmited transparently through the Weston Clean PAL system. They can then repositioned back onto quincunx sites before being decoded.

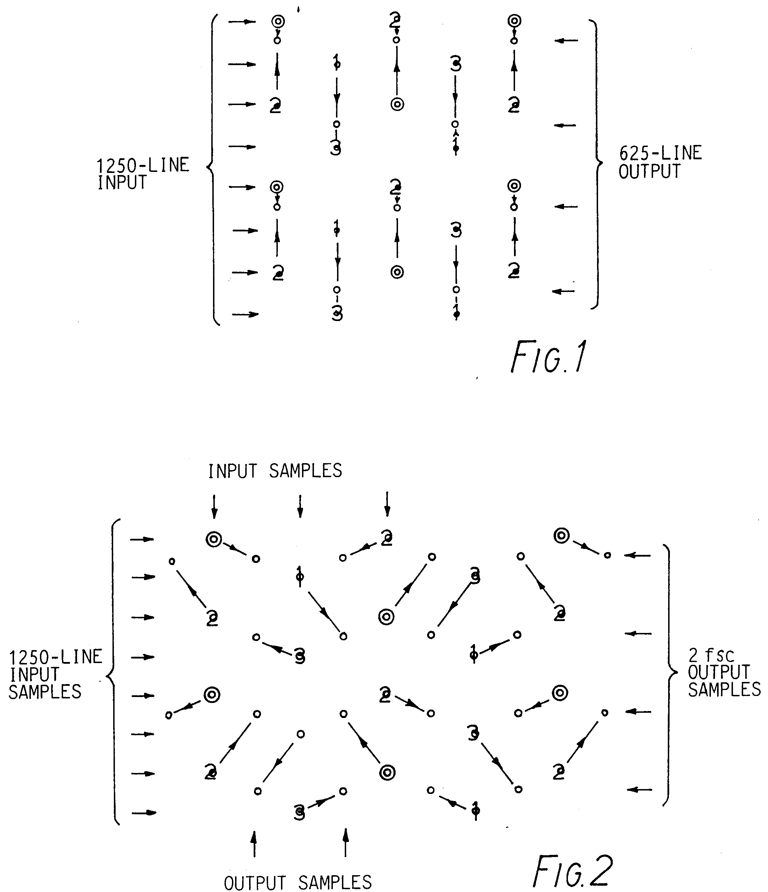

The HD-MAC algorithm already involves vertical sample repositioning to produce a 625-line compatible output from the 1250-line input. This is illustrated by Figure 1. In Figure 1 the positions of lines of a 1250-line input signal are shown on the left-hand side and the positions of lines of a 625-line output signal are shown on the right-hand side. The horizontal axis shows the horizontal positions of the samples. The vertical arrows show how samples in each of four fields (labelled 0, 1, 2 and 3) are moved vertically to lie on a 625-line raster. The sequence repeats on a four-field cycle. The root mean square (rms) distance moved is 1.12 picture lines.

Adding horizontal repositioning to move the samples to 2fsc sites gives the overall repositioning pattern shown in Figure 2. As seen in Figure 2, the input or source samples are quincunxially arranged on each field (0,1,2 or 3) and are also quincunxially arranged taking the picture as a whole, i.e. looking at the samples from all four fields. The repositioned 2fsc samples are line-quincunxially arranged within each field, but are vertically aligned when looking at the picture as a whole, i.e. taking the samples from all four fields. To minimise the horizontal movement, the horizontal position of the output samples falls mid-way between the points at which input samples occur (on the same or other fields). Equally the output line positions lie mid-way between input line positions.

Both of Figures 1 and 2 have been drawn approximately to scale for a 16:9 aspect ratio display. The reduction in sampling rate from HD-MAC's 13.5 MHz to 2fsc (8.86 MHz) is represented by an increase in horizontal pitch. The horizontal repositioning increases the rms distance moved to 1.57 picture lines.

Repositioning is only visible if the PAL coded signal is decoded by a standard PAL decoder. A high definition decoder completely reverses the repositioning.

The 2fsc sampling structure actually contains a slight twist to the left, amounting to 1/4 sample pitch between the top and bottom of the picture. The HD-MAC algorithm should ideally be given a matching twist. Alternatively the samples can simply be repositioned slightly further to the left on each successive line. This would just introduce a slight twist to the conventionally decoded PAL pictures, which is unlikely to be noticeable.

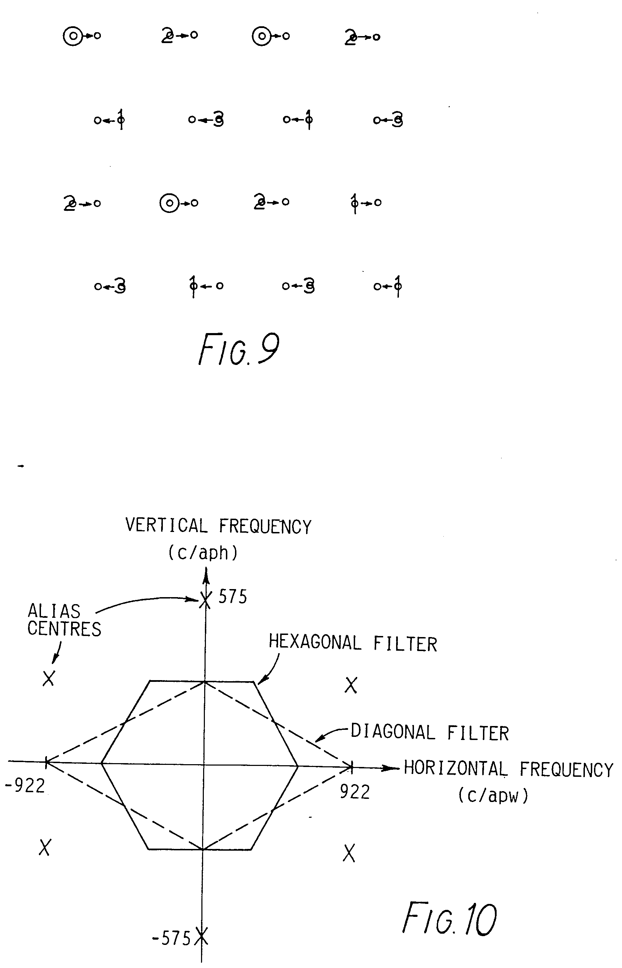

Figure 2 illustrates one way in which the HD-MAC samples shown in Figure 1 may be shifted and repositioned onto 2fsc sampling sites. However, this is not the only way in which the source signal may be subsampled and the samples repositioned, and other variations are possible. One improved possibility is described below with reference to Figure 9.

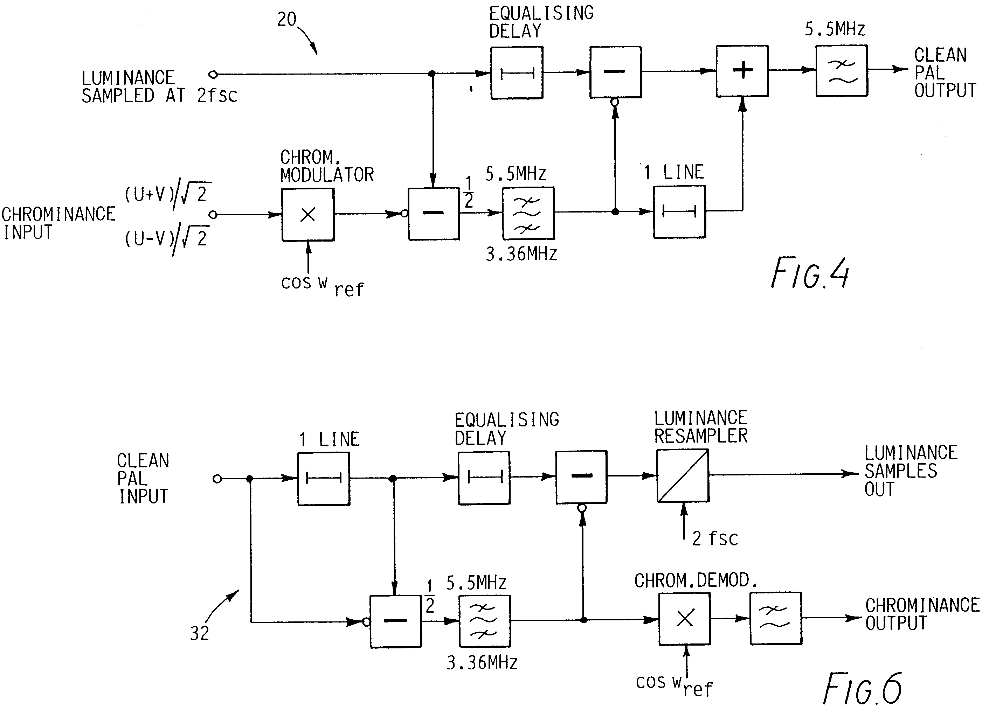

It should be noted that Figure 1 is a development from Figure 4 of our U.K. Patent Specification 2,194,409 (reference 5) which illustrates sample repositioning in more detail. Reference should be made to that specification and to BBC Research Department Report No. 1989/10 (reference 6) for further information in this respect.

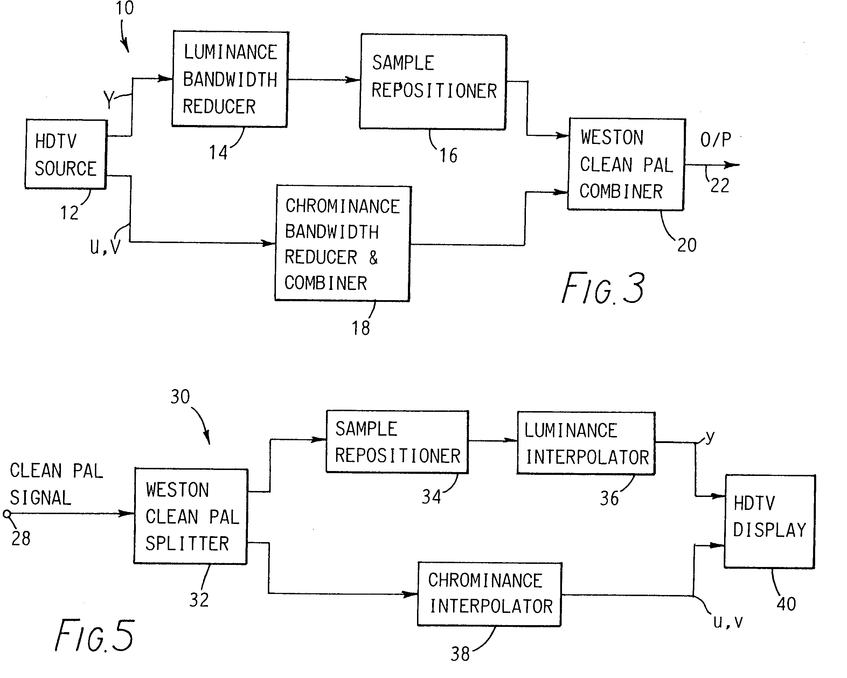

Figure 3 illustrates a coder 10 for implementing the improved system. An HDTV signal source 12 produces an output in any appropriate HDTV format including for example 1250/50/2:1 format or 625/50/1:1 format. Any format which provides luminance and chrominance samples at an appropriately high sample rate, e.g. 54 MHz, may be used, and in general it will be at least and preferably much greater than 4fsc.

The luminance signal Y is applied to a luminance bandwidth reducer 14 in which the luminance sample rate is reduced to an average rate of 2fsc (8.87 MHz for PAL) using HD-MAC type bandwidth/ sample rate reduction algorithms or other appropriate (and possibly simpler) filtering and subsampling algorithms. Thus the output of circuit 14 comprises luminance samples at an average rate of 2fsc. The sample rate reduction algorithm involves the omission of periodic samples, e.g. three out of every four samples.

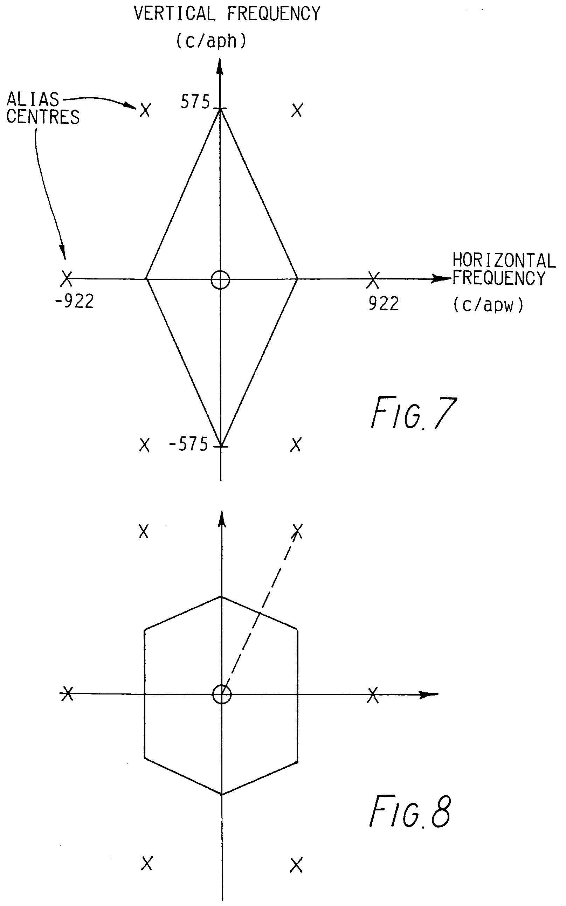

The circuit 14 thus comprises two principle elements, namely a pre-filter and a subsampler, as is known to those skilled in the art. Possible characteristics for the pre-filter are described below with reference to Figures 7, 8 and 10.

In the case of an HD-MAC type system, the output samples have already undergone some vertical repositioning in order that all output samples occur at positions which lie on scan lines corresponding to the normal definition 625/50/2:1 scanning structure. These samples are further repositioned, i.e. retimed, by a sample repositioner 16 such that they lie precisely at 2fsc sampling sites. In the simple case of horizontal repositioning, the repositioner is a simple FIFO memory. Thus the output of the sample repositioner 16 comprises luminance samples on a 2fsc grid, as illustrated in Figure 2.

The chrominance components U,V from the source 12 are applied to a chrominance bandwidth reducer and combiner 18. The particular form of this is not crucial to the present invention. As has been noted, however, the Weston Clean PAL sysstem provides a transparent channel for Y samples which are sited at 2fsc sample sites. Similarly the Weston system provides a single transparent channel for chrominance information of bandwidth around 1.1 MHz for system I PAL, see reference (8). Such a 1.1 MHz bandwidth channel can carry transparently arbitrary chrominance samples at a rate of around 2.2 MHz. Such samples can be obtained by motion compensated subsampling similar to that described for the luminance component.

The output of the circuit 18 comprises (U+V)/ $\sqrt{2}$ and (U-V)/ $\sqrt{2}$ on alternate lines. The luminance output of circuit 16 and the chrominance output of circuit 18 are then applied to a Weston Clean PAL combiner 20 in accordance with references (3) and (4). Circuit 20 provides a Weston Clean PAL signal at its output 22. A block diagram of the circuit 20 is given in Figure 4. However, this is not described here in detail as its construction is self-evident from the figure and will be readily understood by the skilled reader who is familiar with references (3) and (4).

A decoder 30 suitable for use with the encoder of Figure 3 is shown in Figure 5. Clean PAL samples are received at an input 28 and applied to a Weston Clean PAL splitter 32. The circuit 32 is shown in Figure 6 in similar manner to its converse circuit of Figure 4, and detailed description is therefore not given here. The circuit 32 provides luminance samples on a 2fsc grid to a sample repositioner 34 which re-aligns the samples as in Figure 1 at an average sample rate of 2fsc. This grid is appropriate for a luminance interpolator 36 connected to the output of the sample repositioner 34. The luminance interpolator comprises a sample inserter to insert samples at positions at which the samples were omitted in the encoder, e.g. by interpolation, and a post-filter. The output of the luminance interpolator corresponds to the full HD-type display format. Similarly, a chrominance interpolator 38 takes in the chrominance signal on a 625/50/2:1 structure and generates a signal appropriate for the full HD scanning format. The outputs of the circuits 36 and 38 are then applied to an HDTV display 40, which can operate at 1250/50/2:1 or 625/50/1:1 standard.

Thus it is seen that it is possible to use with a Weston Clean PAL system (references (3) and (4)), also referred to as a "phase segregated" Clean PAL system, a type of sample-rate reduction algorithm which is of similar type to that used in HD-MAC but with an average output sample rate equal to 2fsc (8.8 MHz). These output samples can be transmitted transparently through a Weston Clean PAL coder and decoder by simple horizontal repositioning of the samples such that they fall precisely on a 2fsc grid. This contrasts with the method described in reference (1) for combining HD-MAC type bandwidth/sample-rate reduction algorithms with PAL coding in a compatible manner, and in which the effective luminance frequency is reduced to about 7 MHz in order that the luminance component can be filtered using a 3.5 MHz bandwidth low-pass filter before being added to the modulated chrominance in a PAL coder. The type of HD-MAC sample-rate reduction that might be used is that given in reference (2) which employs motion-compensated subsampling techniques. However, other types of sample rate reduction algorithm may be used provided that they are configured to a give an average output sample rate equal to 2fsc.

Two improvements on the example illustrated will now be described with reference to Figures 7 to 10.

**(1) More Isotropic Resolution.**

The potential vertical resolution of the system proposed is much greater than the horizontal resolution. This arises because the sampling frequency has been reduced from 13.5 MHz to about 2fsc, and because the aspect ratio is 16:9. The crosses in Figure 7 show the spatial frequencies of the alias centres of HD-MAC's sampling pattern, and the diamond shape is the pass-band allowed by the diagonal filter used in the HD-MAC type algorithm. This is the pre-filter in circuit 14 in Figure 3, and the filter in block 22 shown in Figure 5 of our earlier U.K. Specification No. 2,221,813 reference (1), and the corresponding filter in block 68 of Figure 6 of reference (1). Both have the characteristic shown at curve 7 in Figure 4 of reference (1) which illustrates one quarter of the diamond shape.

Figure 8 of the accompanying drawings shows an alternative hexagonal pass-band, which is preferred for use with the present invention. This is much more isotropic. It sacrifices the extreme vertical resolution in order to obtain extra diagonal resolution. The most isotropic resolution is obtained by bisecting, at right angles, the lines joining the alias centres to the origin; such a bisector is shown dotted in the upper right quadrant of the figure.

**(2) Reduced Horizontal and Increased Vertical Sample Pitch.**

An HD-MAC type algorithm may be modified to give more horizontal and less vertical resolution, by halving the horizontal sampling pitch, and doubling the vertical pitch of the quinquix sampling pattern. This is illustrated in Figure 9. As shown by the arrows, this modification also removes the need for vertical repositioning, and halves the horizontal movement required to reposition the samples onto 2fsc sites. This should greatly improve the quality of the compatible picture from a standard decoder, because it involves smaller shifts than the example given in Figure 2.

The potential horizontal resolution is now greater than the vertical, although less so than before. As before, the actual resolution can be made more isotropic by replacing HD-MAC's diagonal pre-filters with hexagonal filters of the type illustrated in Figure 10. This is almost a perfectly regular hexagon when drawn with the conventional axis scales shown.

Thus is it seen that not only may HD-MAC bandwidth reduction algorithms be combined with Weston Clean PAL, by repositioning the samples generated by HD-MAC to lie on the 2fsc sampling sites used by Weston Clean PAL, but also that the distance by which the samples need to be moved can be minimised by changing the vertical pitch of an HD-MAC type of sub-sampling structure, and the resolution of the resulting system can be optimised by changing HD-MAC's diagonal filters to hexagonal filters.

**Claims**

1. A method of transmitting a video signal, comprising receiving a luminance video signal sampled at an average sample rate of at least 4fsc, sub-sampling the received signal by omitting a predetermined proportion of the samples to provide samples at an average sample rate substantially equal to 2fsc, repositioning the samples so as to lie on a 2fsc sampling grid, and transmitting the signal by a phase-segregated PAL or NTSC transmission method.

2. A method according to claim 1, in which the samples are repositioned horizontally and vertically.

3. A method according to claim 1, in which the samples are repositioned horizontally only.

4. A method according to claim 1, 2 or 3, in which the luminance samples are transmitted together with chrominance samples derived from the sum and difference of chrominance components signals on alternate lines.

5. A method according to any preceding claim, including a prefiltering step prior to the sub-sampling step, in which the pre-filter passband is substantially hexagonal on a plot of vertical frequency against horizontal frequency.

6. Apparatus for transmitting a video signal in accordance with the method of claim 1, the apparatus comprising an input for receiving luminance video signal samples at an average sample rate of at least 4fsc, sub-sampling means for sub-sampling the received signal by omitting a predetermined proportion of the samples to provide samples at an average sample rate substantially equal to 2fsc, repositioning means for repositioning the samples so as to lie on a 2fsc sampling grid, and coding means for transmitting the signal by a phase-segregated PAL or NTSC transmission method.

7. A method of receiving a video signal transmitted in accordance with claim 1, comprising receiving a signal transmitted by a phase-segregated PAL or NTSC transmission method having luminance samples positioned on a 2fsc sampling grid, repositioning the samples such that the samples are quincunxially positioned in the picture as a whole to give a signal with an average sample rate of 2fsc, and re-inserting samples to provide an average sample rate of at least 4fsc.

8. A method according to claim 7, in which the samples are repositioned horizontally and vertically.

9. A method according to claim 7, in which the samples are repositioned horizontally only.

10. A method according to claim 7, 8 or 9, in which the received signal also includes chrominance samples derived from the sum and difference of chrominance component signals on alternate lines.

11. Apparatus for receiving a video signal in accordance with the method of claim 7, the apparatus comprising decoding means for decoding a received signal transmitted by a phase-segregated PAL or NTSC method to provide luminance samples positioned on a 2fsc sampling grid, repositioning means for repositioning the samples such that the samples are quincunxially positioned in the picture as a whole to give a signal with an average sample rate of 2fsc, and sample inserting means for re-inserting samples to provide an average sample rate of at least 4fsc.

FIG.1

1250-LINE INPUT

625-LINE OUTPUT

INPUT SAMPLES

1250-LINE INPUT SAMPLES

2 fsc OUTPUT SAMPLES

OUTPUT SAMPLES

FIG.2

10

| HDTV SOURCE | Y | → | LUMINANCE BANDWIDTH REDUCER | → | SAMPLE REPOSITIONER | → | WESTON CLEAN PAL COMBINER | O/P → |

HDTV SOURCE
12

Y

LUMINANCE BANDWIDTH REDUCER
14

SAMPLE REPOSITIONER
16

u,v

CHROMINANCE BANDWIDTH REDUCER & COMBINER
18

WESTON CLEAN PAL COMBINER
20

O/P
22

*FIG.3*

30

CLEAN PAL SIGNAL
28

WESTON CLEAN PAL SPLITTER
32

SAMPLE REPOSITIONER
34

LUMINANCE INTERPOLATOR
36

y

CHROMINANCE INTERPOLATOR
38

HDTV DISPLAY
40

u,v

*FIG.5*

EP 0 475 788 A2

FIG.4

FIG.6

VERTICAL FREQUENCY
(c/aph)

ALIAS
CENTRES

575

HORIZONTAL
FREQUENCY
(c/apw)

-922

922

-575

*FIG.7*

*FIG.8*

FIG.9

VERTICAL FREQUENCY
(c/aph)

ALIAS
CENTRES

575

HEXAGONAL FILTER

DIAGONAL FILTER

HORIZONTAL FREQUENCY
(c/apw)

-922

922

-575

FIG.10